# EUROPÄISCHE PATENTSCHRIFT

(11) **EP 2 292 480 B1**
(45) Veröffentlichungstag und Bekanntmachung des Hinweises auf die Patenterteilung: **09.05.2012**
(21) Anmeldenummer: 10169472.7
(22) Anmeldetag: 14.07.2010
(51) Int. Cl.: B60T 1/087, B60T 10/02, F16D 57/02, F16K 11/07

(54) **Retardersystem für ein Kraftfahrzeug**
Retarder system for a motor vehicle
Système de retardateur pour un véhicule automobile

(30) Priorität: 03.09.2009 DE 102009029150
(43) Veröffentlichungstag der Anmeldung: 09.03.2011
(73) Patentinhaber: ZF Friedrichshafen AG, 88038 Friedrichshafen (DE)
(72) Erfinder: Wanninger, Heinz, 88074 Meckenbeuren (DE); Sauter, Frank, 88074 Meckenbeuren (DE)

(56) Entgegenhaltungen:
- DE-A1- 19 833 891
- DE-A1- 19 860 706
- DE-C1- 19 616 426
- GB-A- 1 326 500

## Beschreibung

Die Erfindung betrifft ein Retardersystem für einen Antriebsstrang eines Kraftfahrzeuges, mit einem Rotor und einem Stator, welche jeweils mit Schaufeln bestückt und einander zugewendet in einem gemeinsamen Gehäuse platziert sind, wobei ein zwischen dem Rotor und dem Stator ausgebildeter Arbeitsraum über eine externe Druckquelle mit einer definierten Fluidmenge entsprechend einer Schaltstellung eines Umschaltventils befüllbar ist, welches nach Art eines Wegeventils mit einem in einem Ventilgehäuse verschiebbar geführten Ventilkolben ausgestaltet ist und einen Fluidfluss in einer ersten Schaltstellung des Ventilkolbens zwischen mindestens einem, mit dem Arbeitsraum verbundenen Arbeitsanschluss und zumindest einem Druckanschluss der Druckquelle ermöglicht, während der mindestens eine Arbeitsanschluss in einer zweiten Schaltstellung mit zumindest einem Rücklaufanschluss verbindbar ist.

Auf dem Gebiet der Nutzkraftfahrzeuge kommen üblicherweise neben herkömmlichen Betriebsbremsen sogenannte Dauerbremsen zum Einsatz, über welche bei höheren und andauernden Bremsleistungen, wie beispielsweise bei Bergabfahrten, die jeweilige Betriebsbremse entlastet und eine zuverlässige Abbremsung des Fahrzeugs garantiert wird. Eine hierbei gängige Ausgestaltung einer Dauerbremse ist ein sogenannter hydrodynamischer Retarder, bei welchem die Strömungsenergie einer Flüssigkeit zum Abbremsen des Kraftfahrzeuges genutzt wird. Dabei wird je nach Anordnung des hydrodynamischen Retarders im Antriebsstrang des Kraftfahrzeuges zwischen Primärretardern bei Anordnung zwischen Motor und Getriebe und Sekundärretardern bei Anordnung zwischen Getriebe und Antriebsachse unterschieden. Beiden Fällen gemeinsam ist die Steuerung des zu erzeugenden Bremsmoments über den Füllungsgrad des Retarders. Diese Steuerung wird dabei üblicherweise durch Regelung eines Fluidkreislaufs über Ventile dargestellt.

Aus der DE 198 33 891 A1 ist ein hydrodynamischer Retarder für ein Kraftfahrzeug bekannt das einen auf einer Welle angeordneten Rotor aufweist, der mit der Abtriebswelle eines Getriebes gekoppelt ist und einen Stator, wobei Rotor und Stator in einem Gehäuse angeordnet sind, das mit einem Ölkreislauf verbunden ist, der einen Speicher, eine Pumpe, ein Umschaltventil und eine Steueranordnung aufweist. Ein Regelventil ist vorgesehen, dass den Inhalt des Speichers bei dessen Beaufschlagung mit Druckluft über die Hochdruckseite in den Retarder fördert und das neben der Entleerung des Speichers auch dessen Befüllung steuert.

Aus der DE 101 49 061 A1 ist ein Retardersystem für einen Antriebsstrang eines Kraftfahrzeuges bekannt, bei welchem eine definierte Fluidmenge aus einem Kreislauf einem Arbeitsraum eines Retarders zuführbar ist, wobei der Arbeitsraum zwischen einem Rotor und einem Stator ausgebildet ist. Zur Steuerung der eingeleiteten Fluidmenge ist dem Arbeitsraum dabei ein Umschaltventil vorgeschaltet, das nach Art eines Wegeventils mit einem in einem Ventilgehäuse verschiebbar geführten Ventilkolben ausgebildet ist. Je nach Schaltstellung dieses Ventilkolbens wird dabei eine Befüllung des Arbeitsraums über eine vorgeschaltete Druckquelle in Form einer Pumpe oder eine Entleerung des Arbeitsraumes in einen Rücklauf dargestellt. Zu diesem Zweck sind an dem Ventilgehäuse entsprechende Anschlüsse vorgesehen.

Ausgehend von einem Retardersystem des Standes der Technik ist es die Aufgabe der vorliegenden Erfindung, ein Retardersystem für einen Antriebsstrang eines Kraftfahrzeuges zur Verfügung zu stellen, bei welchem in einem Nichtbremsbetrieb des Retarders ein Zurückströmen von Fluid aus dem Rücklauf in den Arbeitsraum wirksam verhindert werden kann. Dabei sollte diese Unterbindung des Zurückströmens möglichst platzsparend und mit niedrigem Aufwand realisierbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

Die Erfindung umfasst die technische Lehre, dass auf einem Schaft des Ventilkolbens mindestens ein zum Ventilkolben relativ verschiebbares Schließelement geführt ist, das zwischen Absätzen des Ventilkolbens platziert ist. Dabei ist dieses Schließelement mit einem der Absätze über Mittel gekoppelt, die das Schließelement in eine den Fluidfluss unterbrechende Position überführen, sobald sich der Ventilkolben in einer Schaltstellung befindet, in welcher der Arbeitsraum mit dem Rücklauf verbunden ist und ein Unterschreiten eines definierten Fluiddrucks am Arbeitsanschluss des Arbeitsraumes zu verzeichnen ist.

Durch die Koppelung des Schließelements mit dem jeweiligen Absatz des Ventilkolbens und einer druckgesteuerten Überführung in die unterbrechende Position zwischen Arbeitsanschluss und einem Rücklaufanschluss des Rücklaufs kann bis zum Unterschreiten des definierten Druckwerts eine Entleerung des Arbeitsraumes auf die gewohnte Art und Weise stattfinden. Wird dann allerdings der definierte Druckwert unterschritten, dessen Höhe vorzugsweise knapp oberhalb des im Rücklauf vorherrschenden Drucks anzusiedeln ist, so wird das Schließelement in die Position zwischen den Arbeitsanschluss und den Rücklaufanschluss bewegt, wodurch ein Fluidaustausch zwischen beiden Anschlüssen verhindert wird. Erreicht also der Druck im Arbeitsraum, und damit auch am Arbeitsanschluss, ein Druckniveau im Bereich des Rücklaufanschlusses, so wird ein Zurückströmen aus dem Rücklauf in den Arbeitsraum durch das Schließelement verhindert. Dementsprechend kann insbesondere auch bei Schrägstellungen des Kraftfahrzeuges, wie bei Befahren von Steigungen oder Gefällen, ein vollständiges Entleeren des Arbeitsraumes bei Beendigung oder Unterbrechung des Bremsvorganges gewährleistet werden. Dadurch können die auftretenden Verluste im Bereich des Retarders minimiert werden. Zudem zeichnet sich das Umschaltventil aufgrund der nur geringfügigen Veränderung und der Anordnung des Schließelements auf dem Ventilkolben durch einen geringen herstellungstechnischen Aufwand sowie eine extrem platzsparende Lösung aus.

Im Unterschied hierzu kann bei einem System des Standes der Technik bei einer Schrägstellung des Kraftfahrzeuges und damit auch des Retarders mitsamt Umschaltventil ein Zurückfließen von Fluid aus dem Rücklauf in den Arbeitsraum stattfinden, sobald der Druck im Arbeitsraum auf einen Wert im Bereich des Drucks im Rücklauf gefallen ist. Dies führt dazu, dass sich der Arbeitsraum des Retarders nicht vollständig entleert und damit auch im Nichtbremsbetrieb teilweise mit Fluid gefüllt ist, was für entsprechende Verlustleistungen sorgt.

Gemäß einer Ausführungsform der Erfindung ist das mindestens eine Schließelement im Bereich eines Außendurchmessers zusätzlich am seitens des Rücklaufanschlusses platzierten Absatz über eine Erstreckung in einer hierzu korrespondierenden Ausnehmung geführt. Durch die zusätzliche Führung des Schließelements im Außenbereich kann ein Verkanten desselbigen bei einer Verschiebung innerhalb des umliegenden Ventilgehäuses verhindert und dabei gleichzeitig ein geringeres Spaltmaß gegenüber dem Ventilgehäuse in radialer Richtung erreicht werden.

In Weiterbildung der Erfindung sind die Mittel in einem Innenraum aufgenommen, welcher zwischen dem seitens des zumindest einen Rücklaufanschlusses platzierten Absatz und dem mindestens einen Schließelement ausgebildet ist. Dies hat den Vorteil, dass somit eine platzsparende Integrierung der Mittel im Bereich des Ventilkolbens möglich ist.

Es ist eine weitere, vorteilhafte Ausführungsform der Erfindung, dass das mindestens eine Schließelement auf einer dem druckanschlussseitigen Absatz zugewandten Seite eine Abstufung aufweist. Vorteilhafterweise wird hierdurch bei einer Bewegung des Schließelements in Richtung des druckanschlussseitigen Absatzes ein Anschlag mit niedrigem, herstellungstechnischen Aufwand ausgebildet. Hierdurch kann die Position des Schließelements zur Unterbrechung des Fluidflusses zwischen Arbeitsanschluss und Rücklaufanschluss definiert werden.

Entsprechend einer weiteren, vorteilhaften Ausgestaltung der Erfindung sind die Mittel durch je ein elastisches Element gebildet. Zweckmäßigerweise ist dieses elastische Element hierbei eine Feder. Hierdurch lässt sich die erfindungsgemäße Koppelung des Schließelements mit dem jeweiligen Absatz des Ventilkolbens sehr platzsparend verwirklichen, wobei die Definition des Druckwerts, ab welchem eine Überführung in die unterbrechende Position stattfindet, durch Wahl einer entsprechenden Federsteifigkeit darstellbar ist. Allerdings ist hierbei ebenso die Anwendung von Gummipuffern oder Membranen als elastische Elemente denkbar.

Gemäß einer alternativen Ausführungsform der Erfindung sind die Mittel durch eine Steuerhydraulik gebildet. Folglich kann eine Überführung in die unterbrechende Position durch gezielte Betätigung dieser Steuerhydraulik erfolgen, so dass auch Veränderungen des definierten Druckwerts des Fluids problemlos realisierbar sind. Somit kann eine individuelle Anpassung an das Entleerverhalten des jeweiligen Retarders vorgenommen werden. An dieser Stelle kommt aber auch die Anwendung eines pneumatischen oder elektromagnetischen Steuersystems in Frage.

In Weiterbildung der Erfindung ist eine Stirnseite des Ventilkolbens mit einem Betätigungsdruck beaufschlagbar, während auf einer hierzu entgegengesetzten Stirnseite eine Rückstellfeder vorgesehen ist. Dadurch kann eine zuverlässige Steuerung des Ventilkolbens verwirklicht werden.

Weitere, die Erfindung verbessernde Maßnahmen werden nachstehend gemeinsam mit der Beschreibung einer bevorzugten Ausführungsform der Erfindung anhand von Figuren näher dargestellt.

Es zeigt:
- Fig. 1: eine schematische Ansicht des erfindungsgemäßen Retar- dersystems;
- Fig. 2: eine Schnittansicht eines Umschaltventils des erfindungs- gemäßen Retardersystems in einer ersten Schaltstellung; und
- Fig. 3: eine Schnittansicht des Umschaltventils in einer zweiten Schaltstellung.

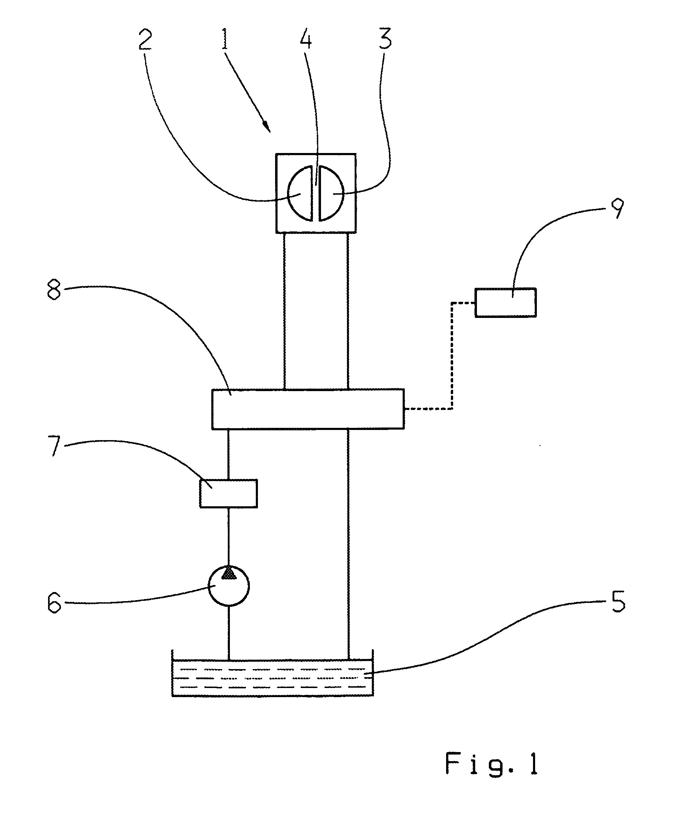

Aus Fig. 1 geht eine schematische Ansicht des erfindungsgemäßen Retardersystems hervor. Wie zu erkennen ist, verfügt das Retardersystem über einen Retarder 1, welcher in einem Gehäuse einen Rotor 2 und einen Stator 3 aufnimmt, die jeweils mit Schaufeln bestückt und einander zugewendet einen zwischenliegenden Arbeitsraum 4 ausbilden. Im Falle eines Bremsvorganges des zugehörigen Kraftfahrzeuges wird dem Retarder 1 Fluid in Form von Öl aus einem Vorratsbehälter 5 über eine Druckquelle 6 in Form einer Förderpumpe zugeführt. Bei dem Vorratsbehälter 5 kann es sich beispielsweise um einen Ölsumpf eines benachbart liegenden Kraftfahrzeuggetriebes handeln. Das über die Druckquelle 6 angesaugte Fluid wird im Anschluss daran zu einem - nicht weiter im Detail dargestellten - Regelventil 7 befördert, welches eine Druckeinstellung entsprechend des im Retarder 1 zu erzeugenden Bremsmoment vornimmt. Das somit auf einen bestimmten Druck eingestellte Fluid wird im weiteren Verlauf einem Umschaltventil 8 zugeführt, das den Fluidstrom zum Arbeitsraum 4 des Retarder 1 oder aus dem Arbeitsraum 4 heraus durch jeweils zugehörige Schaltstellungen regelt. Zum Überführen des Umschaltventils 8 in die entsprechenden Stellungen ist ein Schaltventil 9 vorgesehen, welches durch eine Druckbeaufschlagung die entsprechenden Schaltstellungen hervorrufen kann.

Zu Beginn eines Bremsvorgangs des Kraftfahrzeuges wird durch Druckbeaufschlagung des Umschaltventils 8 über das Schaltventil 9 eine Förderung von Fluid über die Druckquelle 6 in den Arbeitsraum 4 des Retarders 1 ermöglicht. Im Retarder 1 wird daraufhin auf dem Fachmann bekannte Art und Weise ein Bremsmoment durch ein Beschleunigen des eingebrachten Fluids an den Schaufeln des Rotors 2 mit einem darauf folgenden Abbremsen an den Schaufeln des Stators 3 erzeugt. Ist der Bremsvorgang dann beendet, so wird das Umschaltventil 8 druckentlastet, wodurch in eine Schaltstellung gewechselt wird, in welcher das im Retarder 1 befindliche Fluid zum Vorratsbehälter 5 zurückströmen kann. Hierbei könnte es allerdings je nach Einbauhöhe des Retarders 1 bezüglich des Vorratsbehälters 5 dazu kommen, dass Fluid über das Umschaltventil 8 in den Retarder 1 zurückfließen würde. Hierdurch würde auch im Nichtbremsbetrieb des Retarders 1 aufgrund des ständig laufenden Rotors 2 ein unerwünschtes Bremsmoment erzeugt werden. Um dieses Zurückfließen nun zu verhindern, weist das Umschaltventil 8 einen gesonderten Aufbau auf, auf welchen nun näher eingegangen werden soll.

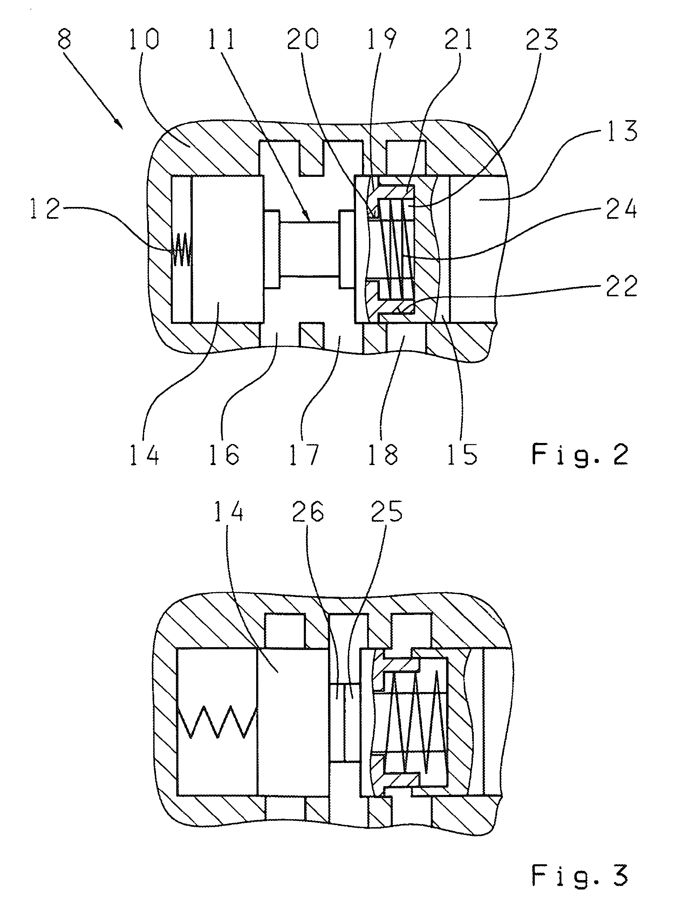

In Fig. 2 ist eine Schnittansicht des Umschaltventils 8 dargestellt. Wie hierbei zu erkennen ist, ist dieses nach Art eines Wegeventils ausgestaltet, das in einem Ventilgehäuse 10 einen Ventilkolben 11 verschiebbar aufnimmt, wobei der Ventilkolben 11 an einem stirnseitigen Ende über eine Rückstellfeder 12 federkraftbelastet ist, während an einem entgegengesetzten, stirnseitigen Ende ein Druckraum 13 zur Druckbeaufschlagung über das Schaltventil 9 vorgesehen ist. Der Ventilkolben 11 verfügt des Weiteren über zwei Absätze 14 und 15, über welche je nach axialer Position des Ventilkolbens 11 im Ventilgehäuse 10 ein Fluidfluss von einem Druckanschluss 16, welcher im weiteren Verlauf mit der Druckquelle 6 in Verbindung steht, zu einem Arbeitsanschluss 17 des Retarders 1 oder von dem Arbeitsanschluss 17 zu einem Rücklaufanschluss 18 des Vorratsbehälters 5 ermöglicht wird.

Als Besonderheit ist allerdings zwischen den Absätzen 14 und 15 ein Schließelement 19 vorgesehen, dass mit einer zentrischen Durchgangsbohrung 20 auf dem Ventilkolben 11 verschiebbar geführt ist. Des Weiteren verfügt dieses Schließelement 19 über eine umlaufende Erstreckung 21, über welche das Schließelement 19 auch im Bereich seines Außendurchmessers in einer hierzu korrespondierenden Ausnehmung 22 des Absatzes 15 geführt ist. Dabei definieren das Schließelement 19 und der Absatz 15 einen zwischenliegenden Innenraum 23, in dem eine Feder 24 platziert ist.

In Fig. 2 ist das Umschaltventil 8 in einer ersten Schaltstellung dargestellt, bei welcher der Ventilkolben 11 im Bereich des Druckraumes 13 mit unter Druck stehendem Fluid beaufschlagt ist und die dargestellte Position unter Komprimierung der Rückstellfeder 12 einnimmt. In diesem Fall wird aufgrund der axialen Positionen der Absätze 14 und 15 ein Fließen von Fluid aus dem Druckanschluss 16 in den Arbeitsanschluss 17, also von der Druckquelle 6 zum Retarder 1 ermöglicht. Aufgrund des hierbei einwirkenden Drucks wird das Schließelement 19 entgegen der Feder 24 an den Absatz 15 angedrückt. Folglich kann das Fluid ungehindert zum Arbeitsanschluss 17 fließen.

Wird nun allerdings der Druckraum 13 druckentlastet, so bewirkt die Rückstellfeder 12, dass der Ventilkolben 11 axial in Richtung Druckraum 13 zurückbewegt wird. Ab einer bestimmten axialen Position verschließt der Absatz 14 hierbei den Druckanschluss 16, während das immer noch an den Absatz 15 angedrückte Schließelement 19 den Rücklaufanschluss 18 freigibt. Ab diesem Zeitpunkt kann Fluid über den Arbeitsanschluss 17 in den Rücklaufanschluss 18 zurückströmen. Die zunehmende Entleerung des Retarders 1 bewirkt allerdings, dass auch der Fluiddruck am Arbeitsanschluss 17 stetig abnimmt. Ab Unterschreiten eines definierten Fluiddrucks am Arbeitsanschluss 17, welcher vorzugsweise knapp oberhalb eines Drucks innerhalb des Rücklaufs zum Vorratsbehälter 5 liegt, reicht der auf das Schließelement 19 einwirkende Druck nicht mehr aus, die Feder 24 zu komprimieren. Dies führt dazu, dass das Schließelement 19 über die Feder 24 in Richtung des Absatzes 14 bewegt wird, bis es zu einer Anlage einer Abstufung 25 am Schließelement 19 an einem Anschlag 26 des Absatzes 14 kommt. Zu diesem Zeitpunkt ist die in Fig. 3 dargestellte zweite Schaltstellung des Umschaltventils 8 erreicht. Aufgrund der Position des Schließelements 19 wird ein Zurückströmen aus dem Rücklaufanschluss 18 in den Arbeitsanschluss 17 und damit auch aus dem Vorratsbehälter 5 in den Retarder 1 verhindert.

Bei einer erneuten Druckbeaufschlagung des Druckraumes 13 wird der Ventilkolben 11 wiederum in Richtung entgegen der Rückstellfeder 12 bewegt, wobei der Absatz 14 auf diesem Weg ab einer bestimmten Position erneut den Druckanschluss 16 freigibt. Durch das daraufhin wieder einströmende, unter Druck stehende Fluid wird das Schließelement 19 erneut entgegen der Feder 24 an den Absatz 15 angedrückt, so dass bei Erreichen der endgültigen Position des Ventilkolbens 11 wiederum die in Fig. 2 dargestellte Schaltstellung eingenommen wird.

Mittels des erfindungsgemäßen Retardersystems kann somit auf kompakte Art und Weise und mit niedrigem Herstellungsaufwand ein Zurückströmen von Fluid aus dem Vorratsbehälter 5 in den Retarder 1 verhindert werden. Dementsprechend kann eine ausreichende Entleerung des Retarders 1 auch bei einer Schrägstellung des Kraftfahrzeuges erreicht werden.

### Bezugszeichen

- 1: Retarder
- 2: Rotor
- 3: Stator
- 4: Arbeitsraum
- 5: Vorratsbehälter
- 6: Druckquelle
- 7: Regelventil
- 8: Umschaltventil
- 9: Schaltventil
- 10: Ventilgehäuse
- 11: Ventilkolben
- 12: Rückstellfeder
- 13: Druckraum
- 14: Absatz
- 15: Absatz
- 16: Druckanschluss
- 17: Arbeitsanschluss
- 18: Rücklaufanschluss
- 19: Schließelement
- 20: Innenbohrung
- 21: Erstreckung
- 22: Ausnehmung
- 23: Innenraum
- 24: Feder
- 25: Abstufung
- 26: Anschlag

## Patentansprüche

1. Retardersystem für einen Antriebsstrang eines Kraftfahrzeuges, mit einem Rotor (2) und einem Stator (3), welche jeweils mit Schaufeln bestückt und einander zugewendet in einem gemeinsamen Gehäuse platziert sind, wobei ein zwischen dem Rotor (2) und dem Stator (3) ausgebildeter Arbeitsraum (4) über eine externe Druckquelle (6) mit einer definierten Fluidmenge entsprechend einer Schaltstellung eines Umschaltventils (8) befüllbar ist, welches nach Art eines Wegeventils mit einem in einem Ventilgehäuse (10) verschiebbar geführten Ventilkolben (11) ausgestaltet ist und einen Fluidfluss in einer ersten Schaltstellung des Ventilkolbens (11) zwischen mindestens einem mit dem Arbeitsraum (4) verbundenen Arbeitsanschluss (17) und zumindest einem Druckanschluss (16) der Druckquelle (6) ermöglicht, während der mindestens eine Arbeitsanschluss (17) in einer zweiten Schaltstellung mit zumindest einem Rücklaufanschluss (18) verbindbar ist, **dadurch gekennzeichnet, dass** auf einem Schaft des Ventilkolbens (11) mindestens ein zum Ventilkolben (11) relativ verschiebbares Schließelement (19) geführt ist, welches zwischen Absätzen (14, 15) des Ventilkolbens (11) platziert und mit einem der Absätze (15) über Mittel gekoppelt ist, die das mindestens eine Schließelement (19) in der zweiten Schaltstellung und ab Unterschreiten eines definierten Fluiddrucks am mindestens einen Arbeitsanschluss (17) in eine den Fluidfluss unterbrechende Position überführen.

2. Retardersystem nach Anspruch 1, **dadurch gekennzeichnet, dass** das mindestens eine Schließelement (19) im Bereich eines Außendurchmessers zusätzlich am seitens des zumindest einen Rücklaufanschlusses (18) platzierten Absatz (15) über eine Erstreckung (21) in einer hierzu korrespondierenden Ausnehmung (22) geführt ist.

3. Retardersystem nach Anspruch 2, **dadurch gekennzeichnet, dass** die Mittel in einem Innenraum (23) aufgenommen sind, welcher zwischen dem seitens des zumindest einen Rücklaufanschlusses (18) platzierten Absatz (15) und dem mindestens einen Schließelement (19) ausgebildet ist.

4. Retardersystem nach einem der Ansprüche 1 bis 3, **dadurch gekennzeichnet, dass** das mindestens eine Schließelement (19) eine Abstufung (25) aufweist, die sich in Richtung des seitens des zumindest einen Druckanschlusses (16) vorgesehenen Absatzes (14) erstreckt.

5. Retardersystem nach einem der vorhergehenden Ansprüche, **dadurch gekennzeichnet, dass** die Mittel durch je ein elastisches Element gebildet sind.

6. Retardersystem nach Anspruch 5, **dadurch gekennzeichnet, dass** das je eine elastische Element eine Feder (24) ist.

7. Retardersystem nach einem der Ansprüche 1 bis 4, **dadurch gekennzeichnet, dass** die Mittel durch je eine Steuerhydraulik gebildet sind.

8. Retardersystem nach einem der vorhergehenden Ansprüche, **dadurch gekennzeichnet, dass** eine Stirnseite des Ventilkolbens (11) mit einem Betätigungsdruck beaufschlagbar ist, während auf einer entgegengesetzten Stirnseite eine Rückstellfeder (12) vorgesehen ist.

## Claims

1. Retarder system for a drivetrain of a motor vehicle, having a rotor (2) and a stator (3) which are each equipped with blades and which are placed facing towards one another in a common housing, wherein a working chamber (4) formed between the rotor (2) and the stator (3) can be filled, by means of an external pressure source (6), with a defined fluid quantity in accordance with a switching position of a switching valve (8) which is designed in the form of a directional control valve with a valve piston (11) movably guided in a valve housing (10) and which, in a first switching position of the valve piston (11), permits a fluid flow between at least one working port (17) connected to the working chamber (4) and at least one pressure port (16) of the pressure source (6), whereas in a second switching position, the at least one working port (17) can be connected to at least one return port (18), **characterized in that** at least one closing element (19) which is movable relative to the valve piston (11) is guided on a shank of the valve piston (11), which closing element (19) is placed between shoulders (14, 15) of the valve piston (11) and is coupled to one of the shoulders (15) via means which, in the second switching position and when a defined fluid pressure at the at least one working port (17) is undershot, moves the at least one closing element (19) into a position in which the fluid flow is shut off.

2. Retarder system according to Claim 1, **characterized in that** the at least one closing element (19) is additionally guided, in the region of an outer diameter, on the shoulder (15) situated at the at least one return port (18), over an extent (21) in a recess (22) corresponding to said extent (21).

3. Retarder system according to Claim 2, **characterized in that** the means are accommodated in an interior space (23) which is formed between the shoulder (15) situated at the at least one return port (18) and the at least one closing element (19).

4. Retarder system according to one of Claims 1 to 3, **characterized in that** the at least one closing element (19) has a step (25) which extends in the direction of the shoulder (14) provided at the at least one pressure port (16).

5. Retarder system according to one of the preceding claims, **characterized in that** the means are formed by in each case one elastic element.

6. Retarder system according to Claim 5, **characterized in that** the in each case one elastic element is a spring (24).

7. Retarder system according to one of Claims 1 to 4, **characterized in that** the means are formed by in each case one control hydraulics facility.

8. Retarder system according to one of the preceding claims, **characterized in that** one end side of the valve piston (11) can be acted on with an actuation pressure, whereas a restoring spring (12) is provided on an opposite end side.

## Revendications

1. Système de retardateur pour une chaîne cinématique d'un véhicule automobile, comprenant un rotor (2) et un stator (3), qui sont chacun munis d'aubes et qui, tournés l'un vers l'autre, sont placés dans un boîtier commun, un espace de travail (4) réalisé entre le rotor (2) et le stator (3) pouvant être rempli par le biais d'une source de pression externe (6) d'une quantité de fluide définie correspondant à une position de commutation d'une soupape d'inversion (8), qui est configurée à la manière d'une soupape de distribution avec un piston de soupape (11) guidé de manière déplaçable dans un boîtier de soupape (10) et qui permet un flux de fluide dans une première position de commutation du piston de soupape (11) entre au moins un raccord de travail (17) connecté à l'espace de travail (4) et au moins un raccord de pression (16) de la source de pression (6), tandis que l'au moins un raccord de travail (17) peut être connecté dans une deuxième position de commutation à au moins un raccord de retour (18), **caractérisé en ce que** sur une tige du piston de soupape (11) est guidé au moins un élément de fermeture (19) pouvant être fermé de manière relative par rapport au piston de soupape (11), lequel élément de fermeture est placé entre des épaulements (14, 15) du piston de soupape (11) et est accouplé à l'un des épaulements (15) par le biais de moyens qui transfèrent l'au moins un élément de fermeture (19) dans la deuxième position de commutation et à partir d'une pression en dessous d'une pression de fluide définie au niveau d'au moins un raccord de travail (17), le transfèrent dans une position interrompant le flux de fluide.

2. Système de retardateur selon la revendication 1, **caractérisé en ce que** l'au moins un élément de fermeture (19) est guidé en outre dans la région d'un diamètre extérieur sur une distance (21) dans un évidement (22) correspondant, au niveau de l'épaulement (15) placé du côté de l'au moins un raccord de retour (18).

3. Système de retardateur selon la revendication 2, **caractérisé en ce que** les moyens sont reçus dans un espace interne (23) qui est réalisé entre l'épaulement (15) placé du côté de l'au moins un raccord de retour (18) et l'au moins un élément de fermeture (19).

4. Système de retardateur selon l'une quelconque des revendications 1 à 3, **caractérisé en ce que** l'au moins un élément de fermeture (19) présente un gradin (25) qui s'étend dans la direction de l'épaulement (14) prévu du côté de l'au moins un raccord de pression (16).

5. Système de retardateur selon l'une quelconque des revendications précédentes, **caractérisé en ce que** les moyens sont formés par un élément élastique respectif.

6. Système de retardateur selon la revendication 5, **caractérisé en ce que** l'élément élastique respectif est un ressort (24).

7. Système de retardateur selon l'une quelconque des revendications 1 à 4, **caractérisé en ce que** les moyens sont formés par un système hydraulique de commande respectif.

8. Système de retardateur selon l'une quelconque des revendications précédentes, **caractérisé en ce qu'**un côté frontal du piston de soupape (11) peut être sollicité par une pression d'actionnement, tandis qu'un ressort de rappel (12) est prévu sur un côté frontal opposé.
